(19) Europäisches Patentamt
European Patent Office
Office européen des brevets

(11) Publication number: 0 220 764 B1

(12) EUROPEAN PATENT SPECIFICATION

(45) Date of publication of the patent specification: 31.01.90

(51) Int. Cl.⁴: C03C 11/00, C03C 3/06, C03C 3/076

(21) Application number: 86201756.3

(22) Date of filing: 10.10.86

# (54) Chemically durable porous glass and process for the manufacture thereof.

(30) Priority: 14.10.85 JP 229079/85

(43) Date of publication of application: 06.05.87 Bulletin 87/19

(45) Publication of the grant of the patent: 31.01.90 Bulletin 90/5

(84) Designated Contracting States: DE FR GB IT NL

(56) References cited:
GB-A- 2 100 248
US-A- 3 843 341

PATENT ABSTRACTS OF JAPAN, unexamined applications, C-field, vol. 9, no. 17, 24.01.1985 THE PATENT OFFICE JAPANESE GOVERNMENT, p. 12 C 262

The file contains technical information submitted after the application was filed and not included in this specification

(73) Proprietor: AGENCY OF INDUSTRIAL SCIENCE AND TECHNOLOGY, 3-1, 1-chome, Kasumigaseki, Chiyoda-ku Tokyo(JP)

(72) Inventor: Eguchi, Kiyohisa, 1-72, Seiwadai Nishi 2-chome, Kawanishi-shi Hyogo-ken(JP)
Inventor: Tanaka, Hiroshi, 11-2, Midoridai 3, Kasanishi-shi Hyogo-ken(JP)
Inventor: Yazawa, Tetsuo, 4-13, Satsukigaoka 3, Ikeda-shi Osaka-fu(JP)
Inventor: Yamaguro, Takao, 15-22, Midorocho 1, Wada-shi Osaka-fu(JP)

(74) Representative: Marchi, Massimo et al, c/o Marchi & Mittler s.r.l. Viale Lombardia 20, I-20131 Milano(IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The present invention relates to a chemically-durable porous glass and a process for the manufacture thereof. More particularly, the invention relates to a novel chemically-durable porous glass useful for various separating media or membranes or as filling material for use in gel permeation chromatography, and also to a process for the manufacture thereof by a phase separation method.

With reference to United States Patents 2 106 744 and 3 843 341 for example, thereby it is known to produce a porous glass by heat treating at a temperature of from 500 to 650°C a borosilicate glass mainly comprising silicic acid, boric acid, alumina and alkali substances to cause a phase separation between a phase mainly comprising $SiO_2$ and a phase mainly comprising $B_2O_3$, and then by selectively eluting the latter phase with a mineral acid.

However, the porous glass produced by such method has a skeleton mainly comprising $SiO_2$ and therefore has a poor waterproof property and resistance to alkali, and cannot be suitably employed for use in contact with water or alkali.

Also, during the phase separation, a greater or lesser amount of $SiO_2$ tends to mingle into the $B_2O_3$ phase and, after the $B_2O_3$ phase has been eluted with a mineral acid, remains present in fine pores in the form of gel, which has to be removed by washing with alkali. However, it is then likely that $SiO_2$ is also dissolved out, so that it is not possible to effect a sufficient washing with alkali and obtain a porous glass having a large volume of fine pores.

It is also known to produce a porous glass durable to heat and alkali mainly comprising an oxide of a rare earth element with use of a glass from a $B_2O_3$–$Na_2O$ glass-forming system added with an oxide of a rare earth element and by performing a phase separation of the glass, followed by elution of the $B_2O_3$ phase with hot water [e.g., Journal of the American Chemical Society, 66, 221, (1983)].

However, this known process is not generally employable in that it requires the use of a special material such as an oxide of a rare earth element, and has the disadvantage that the size of the pores obtainable in porous glass is only less than 200 angstrom.

JP-A 59 164 648 discloses a porous glass made from a composition containing $ZrO_2$. The said composition, however, contains also $MoO_3$ and an optional amount of an alkaline-earth metal oxide (MgO) which is not sufficient to transfer $ZrO_2$ into the glass skeleton. The most part of $ZrO_2$ is thus transferred into fine pores in the form of gel.

Besides the above mentioned known processes, there have been reported attempts to produce alkali-proof porous glass by adding $ZrO_2$ to a glass, $ZrO_2$ being usually blended as ingredient for imparting an alkali-durability to glass. However, $ZrO_2$ undergoes transfer into the soluble phase during the phase separation and is removed through a subsequently performed elution treatment with an acid, so that such attempts have not been successful.

Accordingly, a primary object of the present invention is to overcome the shortcomings and inconveniences indicated above in connection with porous glass of the prior art and provide a novel porous glass which contains none or, if any, small quantities of gel substances remaining in its fine pores and which has a large volume of fine pores.

It is also a primary object of the invention to provide a process for the manufacture of such novel porous glass which can effectively make use of a conventionally widely used material and can be carried out without complex operations.

Fig. 1 is a graph, showing the distribution of fine pores in the porous glass produced in Example 1 of the present description

Fig. 2 is a graph showing changes in weight over time in an aqueous alkali solution, of a porous glass according to the present invention and of a porous glass of the prior art; and

Fig. 3 is a graph illustrating the relationship between the composition of the starting materials and the porous glass produced according to the invention.

The present invention has been made, based on the knowledge the present inventors have acquired that if, in adding $ZrO_2$ to a glass mainly comprising $SiO_2$ and $B_2O_3$, a certain limited amount of an alkaline-earth metal oxide is also present, then unexpectedly the $ZrO_2$ is selectively transferred, during the phase separation, into the phase mainly comprising $SiO_2$ while little remains present in the soluble phase mainly comprising $B_2O_3$, and that a glass is then obtainable, wherein the skeleton is composed of alkali-proof $SiO_2$–$ZrO_2$ components, which is not adversely affected through washing with alkali, so that it is possible to completely remove gel substances.

Thus, in the novel chemically-durable porous glass according to the present invention, the skeleton comprises an $SiO_2$–$ZrO_2$ glass system containing 2 wt % or more of $ZrO_2$.

If the content of $ZrO_2$ does not reach 2 wt %, then it is impossible to obtain a sufficient alkali-durability.

Although no particular upper limit is applicable to this, the $ZrO_2$ content should preferably be 40 wt % at most: If the $ZrO_2$ content in the material is too high, a crystallization is likely to occur during the preparation of a glass from the material or composition, whereby the formation of a glass becomes hardly operable, so that the $ZrO_2$ content in the starting composition should preferably be so limited as to be 20 wt % at the most so that the $ZrO_2$ content in the porous glass can be 40 wt % at most.

The porous glass according to the invention may normally contain, in addition to $SiO_2$ and $B_2O_3$, an alkaline-earth metal oxide, $Al_2O_3$ and alkali metal oxides derived from the ingredients of the glass, and other impurities which may occasionally unavoidably become mingled, such as $Fe_2O_3$, $TiO_2$, ZnO, MnO, $CaF_2$, $CeO_2$, $SnO_2$ and so forth, but it may not always be necessary to remove those additional or impurities insofar as they do not essentially affect the characteristics of the porous glass, adversely.

According to the process of the invention the porous glass is manufactured as follows:

Initially the preparation is made of a composition containing 40 to 75 wt % of $SiO_2$, 15 to 40 wt % of $B_2O_3$, 4 to 20 wt % of $ZrO_2$ and 5 to 30 wt % of an alkaline-earth metal oxide or 5 to 30 wt % of ZnO, and this composition is melted by heating to a temperature of from 1200 to 1500°C to obtain a glass.

For the alkaline-earth metal oxide, use may be made of CaO, BaO and MgO, which may be used either singly or in the form of a mixture.

The alkaline-earth metal oxide or ZnO is used according to the present invention in order to cause the $ZrO_2$ present at the time of the phase separation to be transferred into the phase mainly comprising $SiO_2$, and without use of this ingredient, $ZrO_2$ is incorporated into the soluble phase and, upon elution with an acid, is removed and it is no longer possible to obtain a desirable chemically-durable porous glass.

With a blending amount of the alkaline-earth metal oxide or ZnO less than 5 wt %, it is not possible to satisfactorily transfer $ZrO_2$ into the phase mainly comprising $SiO_2$ through the phase separation, and with a blending amount exceeding 30 wt %, although no change takes place in the transfer of $ZrO_2$ into the phase mainly comprising $SiO_2$ through the phase separation, the change in the viscosity of the glass in proportion to a change in temperature is promoted and the glass formation hardly possible.

The amount of the alkaline-earth metal oxide or ZnO to be blended depends to some extent on the amount of $ZrO_2$, and it should normally be at least 1 in the molar ratio to the amount of $ZrO_2$ to be contained in the $SiO_2$ phase.

The composition for the preparation of the glass may be made containing, in addition to the above indispensable ingredients, such as $Al_2O_3$ and an alkali metal oxide such as $K_2O$, $Na_2O$ and so forth.

With $Al_2O_3$, a portion thereof may eventually be left in the phase comprising $SiO_2$ and $ZrO_2$, so that it may promote the action of $ZrO_2$ to impart chemical durability to glass. If added in an excessive amount, $Al_2O_3$ tends to raise the melting temperature of the glass, so that its amount should be 5 wt % at the most, based on the whole weight of the composition.

An additional use of an alkali metal oxide may be made to prevent loss of transparency during preparation of the glass and also to lower the melting temperature to enhance processability. If this oxide is added in an excessive amount, however, the desirable characteristics of the $SiO_2$–$ZrO_2$ glass system will be lost, so that the amount of the oxide to be added should be 20 wt % at the most, based on the whole weight of the composition.

In addition to the above recited ingredients, the composition may further include, such substances as may normally be added to glass and/or such impurities as are inevitably derived from components of the material, providing that the content thereof is limited so as not to adversely affect the transfer of $ZrO_2$ into the phase mainly comprising $SiO_2$ and the elution with an acid of the phase mainly comprising $B_2O_3$. Such additional substances or impurities may for example be $Fe_2O_3$, $TiO_2$, ZnO, MnO, $CaF_2$, $CeO_2$, $SnO_2$ and so forth.

As already stated, the composition is melted at a temperature of from 1200 to 1500°C to prepare a glass.

The time required for the preparation of the glass is normally several hours, and the glass prepared is processed by known methods at a temperature of from 800 to 1100°C to the prescribed shape such as for example a tube, a plate, a sheet, a sphere or a ball and so forth.

The shaped glass will then be subjected to a heat treatment at a temperature of from 500 to 800°C for from 2 to 100 hours, wherein a phase separation takes place between a phase mainly comprising $SiO_2$ and $ZrO_2$ and a phase mainly comprising $B_2O_3$ thus forming a structure in which such two phases are complicated.

As used herein the term "heat treatment" means to heat the shaped glass at a temperature within the above mentioned range in an electric furnace or an atmosphere furnace.

According to the present invention, the temperature and the time for the heat treatment to cause the phase separation to occur are selectively varied within the prescribed ranges, whereby it is possible to adjust the pore size or diameter in the porous glass to be produced. Generally, the size of fine pores in the final porous glass tends to be greater as the temperature for the heat treatment is higher, so that when a smaller pore size is desired, the heat treatment may be performed at a lower temperature, whereas it may be performed at a higher temperature when a larger pore size is desired. Further, the fine pore size in porous glass increases exponentially in proportion to an increase in the treating time.

The phase mainly comprising $SiO_2$ and $ZrO_2$ formed through the phase separation treatment is insoluble in or with acid, while the other phase mainly comprising $B_2O_3$ is acid-soluble, so that the shaped or molded glass subjected to the phase separation treatment may be immersed in an acid to dissolve and remove the latter phase and obtain a porous glass.

The acid used in the present invention may preferably be an inorganic acid such as hydrochloric acid, nitric acid, sulfuric acid and phosphoric acid, but it is also possible to use an organic acid such as oxalic acid, acetic acid, succinic acid and citric acid. Normally, the acid is used in the form of a 0.2 to 5 N aqueous solution.

The treatment with such acid is performed by immersing the shaped glass in an aqueous solution of the acid heated to from 90 to 100°C, normally for from several hours to 100 hours.

The porous glass produced as above includes in its fine pores gel substances generated during the elution with the acid such as zirconia gel, silica gel and alumina gel, and these gel substances are removed by means of a washing treatment.

Removal of the gel substances may be performed initially by removing the zirconia gel with an acid, and then removing the silica gel and alumina gel with an aqueous alkali solution.

The acid used for or in the removal of gel substances may be an inorganic acid such as 1 to 5 N sulfuric acid and hydrochloric acid, heated to from 50 to 100°C and, while the aqueous alkali solution may be a 0.1 to 5 N aqueous caustic alkali solution, heated to from 0 to 50°C.

The time required for the removal of gel substances may vary depending on the temperature of the treatment, but it normally is about from 5 to 50 hours.

While by the treatment performed as above the gel substances in fine pores can be completely removed, the $SiO_2$–$ZrO_2$ system forming the glass skeleton is acid-durable and alkali-durable, and does not undergo any change during the treatment, so that it is possible to obtain a porous glass having a large volume of fine pores.

As described above, the porous glass according to the present invention has remarkable durability or resistance to chemicals such as acids and alkalies and a large volume of fine pores, and it has substantially no gel substances remaining in its fine pores and can exhibit a remarkable permeability toward gas and liquids, so that it is widely useful as material for various separating membranes or filling material for use in gel permeation chromatography, for which the porous glass of the prior art cannot be effectively or satisfactorily utilized.

Also, according to the present invention, it is possible to produce porous glass having a size or diameter of pores as desired by suitably selecting the temperature for the phase-separation treatment, whereby, as a further advantage of the invention, it is possible to produce such separating membranes or absorption media wherein the pore size is suitably adapted to the separation or absorption of particular substances.

Now, the present invention will be described in further detail in conjunction with Examples thereof and a Comparative Example.

<u>Example 1</u>

A composition comprising 53.5 wt % of $SiO_2$, 23.0 wt of $B_2O_3$, 8.0 wt % of CaC, 6.0 wt % of $ZrO_2$, 4.5 wt % of $Na_2O$, 2.0 wt % of $K_2O$ and 3.0 wt % of $Al_2O_3$ was melted at 1400°C for 3 hours to prepare a glass, which was shaped into a tube of 1 mm thickness and 10 mm outer diameter by a manual drawing.

The tube was cut into pieces of 10 cm in length to provide samples a to f, which were each subjected to a phase separation by a heat treatment for 24 hours at a different temperature within the range of from 625 to 740°C as shown in Table 1 below and were then immersed into 1 N nitric acid maintained at 90°C for 100 hours to elute the soluble portion. The porous glass samples thus obtained were immersed initially in 3 N sulfuric acid maintained at 100°C for 24 hours and then in 0.5 N aqueous caustic soda solution maintained at 30°C to completely remove gel substances from the fine pores of the glass samples.

Table 1

| Sample | a | b | c | d | e | f |
|---|---|---|---|---|---|---|
| Temperature (°C) | 625 | 650 | 675 | 700 | 725 | 740 |

For each of the above porous glass samples, the distribution of fine pores was determined, and the results of the determination are illustrated in Fig. 1.

Also an analysis of ingredients or components was conducted on samples a and c and the results are shown in the following Table 2.

Table 2

| | a | c |
|---|---|---|
| $SiO_2$ | 89.9 | 86.2 |
| $B_2O_3$ | 0.3 | 0.9 |
| CaO | 0.1 | 0.9 |
| $ZrO_2$ | 7.0 | 5.7 |
| $Na_2O$ | 0.1 | 1.2 |
| $K_2O$ | 0.0 | 0.1 |
| $Al_2O_3$ | 2.6 | 5.0 |

Example 2

A composition comprising 49.2 wt % of $SiO_2$, 24.6 wt % of $B_2O_3$, 14.7 wt % of $ZrO_2$, 6.9 wt % of CaO and 4.6 wt % of $Na_2O$ was melted and shaped as in Example 1 to prepare a glass, which was subjected to a phase separation by a heat treatment at 700°C for 24 hours. Then, in the same manner as in Example 1, the soluble phase was eluted with nitric acid, and gel substances separated out in the fine pores were removed by washing with sulfuric acid and aqueous caustic soda solution.

The porous glass thus obtained had a composition comprising 83.2 wt % of $SiO_2$, 15.1 wt % of $ZrO_2$, 0.2 wt % of CaO, 0.4 wt % of $Na_2O$ and 1.1 wt % of $B_2O_3$ and an average pore size of 0.1 μ.

Example 3

A composition comprising 47.0 wt % of $SiO_2$, 25.0 wt % of $B_2O_3$, 5.0 wt % of $Na_2O$, 10.0 wt % of CaO and 10.0 wt % of $ZrO_2$ was melted and shaped as in Example 1 to prepare a glass, which was subjected to a phase separation by heat treatment at 650°C for 24 hours, and in the same manner as in Example 1, the soluble phase was then eluted with nitric acid, further followed by removal of the gel substances separated out in fine pores by washing with sulfuric acid and then with aqueous caustic soda solution.

The porous glass thus obtained had a composition comprising 89.4 wt % of $SiO_2$, 9.2 wt % of $ZrO_2$, 1.1 wt % of $B_2O_3$, 0.1 wt % of $Na_2O$ and 0.2 wt % of CaO and an average pore diameter of 0.01 μ.

Comparative Example

The composition of Example 1, except that CaO (8.0 wt %) was wholly replaced by $Na_2O$, was melted at 1300°C for 3 hours to prepare a glass. After it was shaped as in Example 1, this glass was subjected to a phase separation by a heat treatment at 675°C for 24 hours, and the soluble phase was eluted by immersion in 1 N nitric acid maintained at 100°C for 100 hours, followed by washing with 3 N sulfuric acid and then with 0.5 N aqueous caustic soda solution, to obtain a porous glass having an average pore diameter of 0.01 μ. The porous glass had a composition comprising 94.5 wt % of $SiO_2$, 4.0 wt % of $B_2O_3$, 0.8 wt % of $ZrO_2$, less than 0.1 wt % of $Na_2O$, less than 0.1 wt % of $K_2O$ and 0.5 wt % of $Al_2O_3$.

As clearly shown by this Example, when no alkaline-earth metal oxide is present in the glass, $ZrO_2$ is almost wholly transferred into the soluble phase and removed.

Example 4

The glass sample obtained in Example 1 was immersed in 1 N aqueous caustic soda solution maintained at 30°C and the reduction of its weight over time was determined to obtain the results shown by solid lines in Fig. 2, which also gives a broken line representation, showing the results of a comparative determination on a Vycor-type porous glass made according to the prior art.

As clearly shown in Fig. 2, the porous glass according to the present invention has remarkably higher alkali durability in comparison with porous glass of the prior art.

Example 5

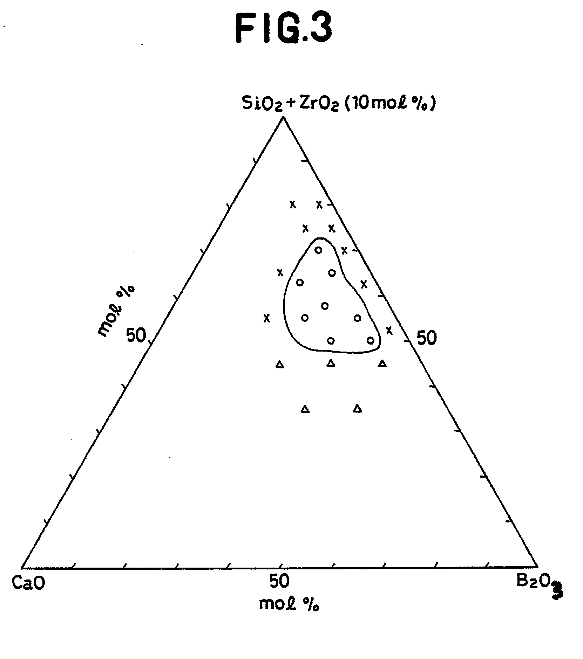

22 different compositions shown in Fig. 3 by symbols X, x, O and Δ, were melted at a temperature of from 1300 to 1450°C for from 30 minutes to 1 hour to prepare glasses, which were shaped into sheets.

Each glass sheet was then subjected to a phase separation by heat treatment at 700°C for 24 hours and was then ground to particles of a size of from 500 to 800 μ. The soluble phase was then eluted with 1 N $HNO_3$ at 98°C for 24 hours, silica of a gel form was removed by treatment with 0.25 N NaOH for 24 hours.

After the above, treated glass particles were sufficiently washed with water and dried, the distribution of fine pores was determined by a pressurized mercury introduction method and a nitrogen absorption method to obtain the results illustrated in Fig. 3.

In Fig. 3, the symbol O represents instances in which porous glass could be obtained, X represents instances where classification did not take place during the melting step, Δ represents instances where gellation took place during the treatment with acid, and x represents instances where phase separation did not occur and porous glass could not be obtained.

Further, each of the compositions was added with and contained 6.5 mol % of $Na_2O$.

## Claims

1. A chemically-durable porous glass the skeleton of which mainly comprises an $SiO_2$–$ZrO_2$ glass system having a content of $ZrO_2$ of 2 or more wt %.

2. A chemically-durable porous glass as claimed in claim 1, wherein the maximum content of $ZrO_2$ is 40 wt %.

3. A chemically durable porous glass as claimed in claim 1, which further contains an alkaline-earth metal oxide or ZnO, $Al_2O_3$, an alkali metal oxide and impurities.

4. A process for the manufacture of a chemically-durable porous glass, comprising the steps of: preparing a composition comprising from 40 to 75 wt % of $SiO_2$, 15 to 40 wt % of $B_2O_3$, 4 to 20 wt % of $ZrO_2$, 5 to 30 wt % of an alkaline-earth metal oxide or ZnO; 0–5% of $Al_2O_3$ and 0–20% of an alkali metal oxide; heating and melting the said composition at a temperature of from 1200 to 1500°C to prepare a glass; heating and shaping the said glass; subjecting the shaped glass to a heat treatment at from 500 to 800°C to cause a phase separation between a phase mainly comprising $SiO_2$ and $ZrO_2$ and a phase mainly comprising $B_2O_3$ and removing the latter phase by eluting with an acid; and removing by washing a gel substance or substances from the fine pores of the glass.

5. A process as claimed in claim 4, wherein the heat treatment of the shaped glass is performed for a period of from 2 to 100 hours.

6. A process as claimed in claim 4, wherein the acid used for the elution of the phase mainly comprising $B_2O_3$ is an inorganic acid.

7. A process as claimed in claim 4, wherein the acid used for the elution of the phase mainly comprising $B_2O_3$ is an organic acid.

8. A process as claimed in claim 4, wherein the acid used for the elution of the phase mainly comprising $B_2O_3$ has a concentration of from 0.2 to 5 N.

9. A process as claimed in claim 6, wherein the inorganic acid is hydrochloric acid, nitric acid or sulfuric acid.

10. A process as claimed in claim 7, wherein the organic acid is oxalic acid, acetic acid, succinic acid or citric acid.

11. A process as claimed in claim 4, wherein the elution of the phase mainly comprising $B_2O_3$ with an acid is performed by immersing the shaped glass in an aqueous acid solution heated at from 90 to 100°C.

12. A process as claimed in claim 4, wherein the gel substance is zirconia gel and is removed by washing with an inorganic acid.

13. A process as claimed in claim 4, wherein the gel substances are silica gel and alumina gel and are removed by washing with an aqueous alkali solution.

## Patentansprüche

1. Chemisch beständiges poröses Glas, dessen Grundgerüst hauptsächlich ein $SiO_2$–$ZrO_2$-Glassystem mit einem $ZrO_2$-Gehalt von 2 Gew.-% oder mehr umfaßt.

2. Chemisch beständiges poröses Glas gemäß Anspruch 1, worin der maximale Gehalt von $ZrO_2$ 40 Gew.-% beträgt.

3. Chemisch beständiges poröses Glas gemäß Anspruch 1, welches zusätzlich ein Erdalkalimetalloxyd oder ZnO, $Al_2O_3$, ein Alkalimetalloxyd und Verunreinigungen enthält.

4. Verfahren zur Herstellung eines chemisch beständigen porösen Glases, das folgende Schritte umfaßt:
Herstellung einer Zusammensetzung, welche 40 bis 75 Gew.-% $SiO_2$, 15 bis 40 Gew.-% $B_2O_3$, 4 bis 20 Gew.-% $ZrO_2$, 5 bis 30 Gew.-% eines Erdalkalimetalloxyds oder ZnO, 0 bis 5% $Al_2O_3$ und 0 bis 20% eines Alkalimetalloxydes umfaßt;
Erhitzen und Schmelzen der Zusammensetzung bei einer Temperatur von 1200 bis 1500°C zur Herstellung des Glases;
Erhitzen und Formen des Glases;
Hitzebehandlung des geformten Glases bei 500 bis 800°C, um eine Phasentrennung zwischen einer Phase, welche überwiegend $SiO_2$ und $ZrO_2$ umfaßt, und einer Phase, welche überwiegend $B_2O_3$ umfaßt, zu bewirken und anschließendes Auswaschen der zuletzt genannten Phase mit einer Säure; und
Entfernung der Gelsubstanz oder -substanzen durch Auswaschen aus den Feinporen des Glases.

5. Verfahren nach Anspruch 4, worin die Hitzebehandlung des geformten Glases über einen Zeitraum von 2 bis 100 Stunden durchgeführt wird.

6. Verfahren nach Anspruch 4, worin die Säure, welche zum Auswaschen der Phase, welche überwiegend $B_2O_3$ umfaßt, eine anorganische Säure ist.

7. Verfahren nach Anspruch 4, worin die Säure, welche zum Auswaschen der Phase, die überwiegend $B_2O_3$ umfaßt, eine organische Säure ist.

8. Verfahren nach Anspruch 4, worin die Säure, welche zum Auswaschen der Phase, welche überwiegend $B_2O_3$ umfaßt, eine Konzentration von 0,2 bis 5 N besitzt.

9. Verfahren nach Anspruch 6, worin die anorganische Säure Chlorwasserstoffsäure, Salpetersäure oder Schwefelsäure ist.

10. Verfahren nach Anspruch 7, worin dir organische Säure Oxalsäure, Essigsäure, Bernsteinsäure oder Zitronensäure ist.

11. Verfahren nach Anspruch 4, worin das Auswaschen der Phase, welche überwiegend $B_2O_3$ umfaßt, mit Säure durch Immergieren des geformten Glases in eine wässrige Säurelösung durchgeführt wird, die man auf 90 bis 100°C erhitzt.

12. Verfahren nach Anspruch 4, worin die Gelsubstanz ein Zirkonerdegel ist und durch Waschen mit einer anorganischen Säure entfernt wird.

13. Verfahren nach Anspruch 4, worin die Gelsubstanzen Silicagel und Aluminiumoxydgel sind und durch Waschen mit einer wäßrigen Alkalilösung entfernt werden.

## Revendications

1. Verre poreux chimiquement résistant dont le squelette comprend principalement un système de verre $SiO_2$–$ZrO_2$ ayant une teneur en $ZrO_2$ de 2% en poids ou plus.

2. Verre poreux chimiquement résistant selon la revendication 1, dans lequel la teneur maximale en $ZrO_2$ est de 40% en poids.

3. Verre poreux chimiquement résistant selon la revendication 1, qui contient en outre un oxyde de métal alcalinoterreux ou ZnO, $Al_2O_3$, un oxyde de métal alcalin et des impuretés.

4. Procédé de fabrication d'un verre poreux chimiquement résistant, comprenant les étapes de: préparer une composition comprenant de 40 à 75% en poids de $SiO_2$, de 15 à 40% en poids de $B_2O_3$, de 4 à 20% en poids de $ZrO_2$, de 5 à 30% en poids d'un oxyde de métal alcalino-terreux ou de ZnO, de 0 à 5% en poids de $Al_2O_3$ et de 0 à 20% en poids d'un oxyde de métal alcalin, chauffer et fondre ladite composition à une température de 1200 à 1500°C pour préparer un verre, chauffer et façonner ledit verre, soumettre le verre façonné à un traitement thermique entre 500 et 800°C pour provoquer une séparation de phases entre une phase comprenant principalement $SiO_2$ et $ZrO_2$ et une phase comprenant principalement $B_2O_3$ et éliminer la dernière phase par élution avec un acide, et éliminer par lavage une ou des substances sous forme de gel des pores fins du verre.

5. Procédé selon la revendication 4, dans lequel le traitement thermique du verre façonné est réalisé pendant une durée de 2 à 100 h.

6. Procédé selon la revendication 4, dans lequel l'acide utilisé pour l'élution de la phase comprenant principalement $B_2O_3$ est un acide minéral.

7. Procédé selon la revendication 4, dans lequel l'acide utilisé pour l'élution de la phase comprenant principalement $B_2O_3$ est un acide organique.

8. Procédé selon la revendication 4, dans lequel l'acide utilisé pour l'élution de la phase comprenant principalement $B_2O_3$ a une concentration de 0,2 à 5 N.

9. Procédé selon la revendication 6, dans lequel l'acide minéral est l'acide chlorhydrique, l'acide nitrique ou l'acide sulfurique.

10. Procédé selon la revendication 7, dans lequel l'acide organique est l'acide oxalique, l'acide acétique, l'acide succinique ou l'acide citrique.

11. Procédé selon la revendication 4, dans lequel l'élution de la phase comprenant principalement $B_2O_3$ avec un acide est réalisée par immersion du verre façonné dans une solution acide aqueuse chauffée entre 90 et 100°C.

12. Procédé selon la revendication 4, dans lequel la substance sous forme de gel est un gel de zircone et est éliminée par lavage avec un acide minéral.

13. Procédé selon la revendication 4, dans lequel les substances sous forme de gel sont un gel de silice et un gel d'alumine et sont éliminées par lavage avec une solution alcaline aqueuse.

# FIG.1

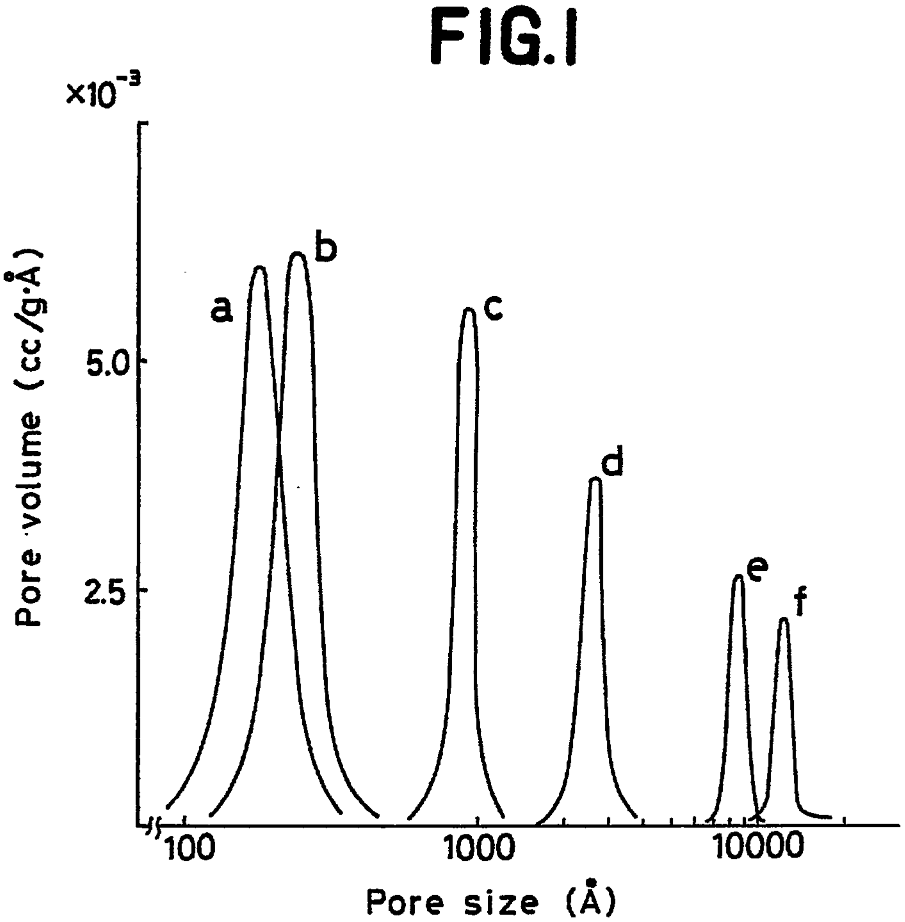
×10⁻³
Pore volume (cc/g·Å)
5.0
2.5
a
b
c
d
e
f
100
1000
10000
Pore size (Å)

# FIG.2

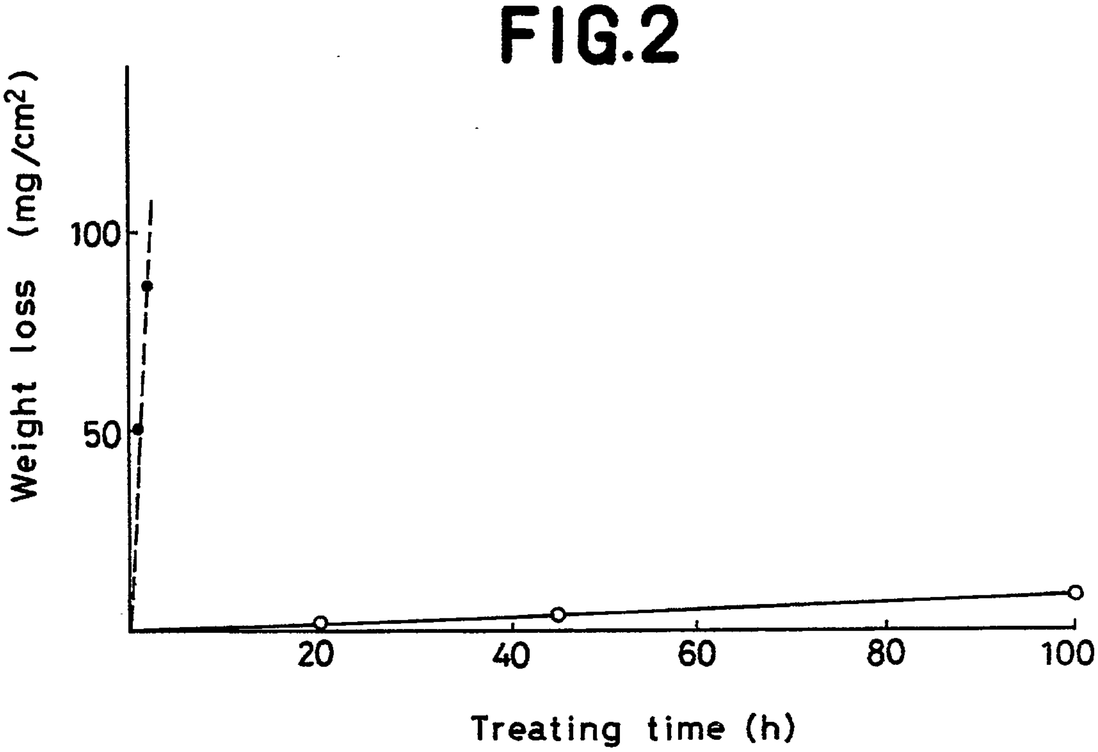
Weight loss (mg/cm²)
100
50
20
40
60
80
100
Treating time (h)

FIG.3